# EUROPEAN PATENT APPLICATION

(11) **EP 4 786 087 A1**
(43) Date of publication of application: **05.08.2026**
(21) Application number: 25880930.0
(22) Date of filing: 11.12.2025
(51) Int. Cl.: B23K 20/10, H01M 50/566, H01M 50/538, H01M 50/107

(54) **ULTRASONIC WELDING DEVICE AND WELDING STRUCTURE**

(30) Priority: 09.12.2025 KR 20250193351; 12.12.2024 KR 20240184330
(71) Applicant: LG ENERGY SOLUTION, LTD., Seoul 07335 (KR)
(72) Inventor: JEONG, Minjae, Yuseong-gu, Daejeon 34122 (KR); CHOI, Suji, Yuseong-gu, Daejeon 34122 (KR); PARK, Ji Min, Yuseong-gu, Daejeon 34122 (KR); CHOI, Yumi, Yuseong-gu, Daejeon 34122 (KR)
(74) Representative: Goddar, Heinz J.
(86) International application number: PCT/KR2025/095782
(87) International publication number: WO 2026/127739

(57) **Abstract**

An ultrasonic welding device for ultrasonically welding laminated workpieces while preventing generation of burrs and/or foreign substances, and a welded structure using the same are provided.

The ultrasonic welding device includes a horn for pressing a first member to torsionally ultrasonically weld the first member and a second member in contact with the first member, wherein the horn includes a horn body having a cylindrical shape to perform torsional rotation, a horn tip extending from one end of the horn body and facing the first member, and a knurling portion protruding from the horn tip to form irregularities on the first member, and the knurling portion includes a plurality of knurling portions spaced apart from each other to prevent the first member from being extruded to an outside of the horn tip due to torsional rotation of the horn and to secure a space in which the first member is accommodated

## Description

### [TECHNICAL FIELD]

The present invention relates to an ultrasonic welding device and a welded structure using the same, and more particularly, to an ultrasonic welding device and a welded structure for ultrasonically welding laminated workpieces while preventing the generation of burrs and/or foreign substances.

### [BACKGROUND ART]

Demand for secondary batteries as energy sources for electronic devices such as mobile phones, laptop computers, and wearable devices, or electric vehicles is increasing. In particular, a battery pack for supplying power to a driving motor may be mounted on an electric vehicle.

A battery pack consists of a plurality of battery modules and a pack case surrounding the plurality of battery modules, and each battery module may be composed of a plurality of battery cells.

Secondary batteries may be classified into nickel-cadmium secondary batteries, nickel-metal hydride secondary batteries, lithium secondary batteries, and the like according to the type of electrode. Among them, research and development are actively being conducted on lithium secondary batteries, which have the advantages of high operating voltage and high energy density per unit weight.

Lithium secondary batteries may be classified, depending on the shape of a battery case, into prismatic secondary batteries and cylindrical secondary batteries in which an electrode assembly is embedded in a metal can, and pouch-type secondary batteries in which an electrode assembly is embedded in a pouch case made of an aluminum laminate sheet.

By inserting a cylindrical battery, an electrode terminal provided on a closed portion side of a battery can may penetrate the closed portion and come into contact with a current collector plate disposed inside the battery can. Therefore, when ultrasonic welding is performed by bringing a welding horn into contact with the current collector plate inside the battery can, the contact area between the current collector plate and the electrode terminal can be welded.

The current collector plate and the electrode terminal may be connected by ultrasonic welding, and the ultrasonic welding device may include an anvil on which the electrode terminal is seated and a horn for pressing the current collector plate.

The horn may be provided with a knurling portion, which is a plurality of protrusion structures, to increase frictional force and pressure. According to such a structure of the knurling portion, burrs and/or metal foreign substances may be generated on the current collector plate, which is an upper member, due to pressing force at the outermost point of the welding area. If used as is, the burrs and/or metal foreign substances may remain inside the battery and affect the performance of the battery.

### [SUMMARY OF THE INVENTION]

### [TECHNICAL PROBLEM]

An object of the present invention is to provide an ultrasonic welding device configured to prevent the generation of burrs and/or foreign substances on a workpiece during ultrasonic welding.

Another object of the present invention is to provide a welded structure including a plurality of laminated workpieces in which no burrs and/or foreign substances are generated.

Another object of the present invention is to provide a welded structure including a plurality of laminated workpieces in which burrs and/or foreign substances are generated to a specific size or less or in a specific number or less.

Another object of the present invention is to enhance battery internal performance and ensure stable battery performance by preventing the generation of burrs and/or foreign substances.

### [TECHNICAL SOLUTION]

An ultrasonic welding device according to an aspect of the present invention includes a horn for pressing a first member to perform torsional ultrasonic welding on the first member and a second member in contact with the first member. The horn includes a horn body having a cylindrical shape configured to perform torsional rotation; a horn tip extending from one end of the horn body and facing the first member; and a knurling portion protruding from the horn tip to form irregularities on the first member. The knurling portion may include a plurality of knurling portions disposed to be spaced apart from each other so as to prevent the first member from being extruded to the outside of the horn tip due to the torsional rotation of the horn and to secure a space in which the first member is accommodated.

In addition, the plurality of knurling portions may be disposed symmetrically from a center of the horn tip.

In addition, the plurality of knurling portions may be spaced apart from each other by different distances.

In addition, the plurality of knurling portions may include a first knurling portion adjacent to an edge of the horn tip, and a second knurling portion disposed at and near the center of the horn tip.

In addition, a cross-section of the horn tip may include a circle, and the first knurling portion may include a plurality of first knurling portions orthogonal to each other with respect to the center of the horn tip.

In addition, the knurling portion may be configured such that a cross-sectional area thereof decreases in a direction from the horn tip toward the first member.

In addition, the knurling portion may have a frusto-conical shape in which a transverse cross-section of the knurling portion is circular and a longitudinal cross-section of the knurling portion is trapezoidal so that the first member flows smoothly due to the torsional rotation of the knurling portion.

In addition, the knurling portion may include a knurling base in contact with the horn tip and having a circular cross-section, a knurling tip capable of contacting the first member and having a circular cross-section with a diameter smaller than a diameter of the cross-section of the knurling base, and a knurling body connecting the knurling base and the knurling tip.

In addition, the first knurling portion may be disposed to be in point contact with the edge of the horn tip.

In addition, the first knurling portion may be disposed to be spaced apart from the edge of the horn tip toward the center of the horn tip.

In addition, a shape of the first knurling portion may be configured to be different from a shape of the second knurling portion.

In addition, the plurality of knurling portions may have a trapezoidal longitudinal cross- section, the first knurling portion may have a frusto-conical shape, and the second knurling portion may have a rectangular frustum shape.

In addition, the plurality of knurling portions may include five knurling portions disposed to be spaced apart from each other along a diameter of the horn tip.

An ultrasonic welding device according to another aspect of the present invention includes a horn for pressing a first member to perform torsional ultrasonic welding on the first member and a second member in contact with the first member. The horn includes a horn body configured to perform torsional rotation; a horn tip extending from one end of the horn body and facing the first member; and a knurling portion protruding from the horn tip to form irregularities on the first member. The horn tip may include a knurling surface on which the knurling portion is disposed, and a flat surface surrounding the knurling surface and adjacent to an edge of the horn tip to prevent a shape of the irregularities corresponding to the edge of the horn tip from being incompletely formed.

In addition, the knurling portion may include a frusto-conical shape in which a longitudinal cross-section of the knurling portion forms a trapezoid.

A welded structure according to an aspect of the present invention includes a first member and a second member subjected to torsional ultrasonic welding with the first member. The first member includes a plurality of indentations formed on a surface thereof to be spaced apart from each other by ultrasonic welding, and the plurality of indentations may be circular.

In addition, the welded structure may constitute a cylindrical battery cell.

In addition, the first member may include a current collector plate constituting the cylindrical battery cell, and the second member may include an electrode terminal provided in a battery case constituting the cylindrical battery cell and accommodating the current collector plate.

### [ADVANTAGEOUS EFFECTS]

According to the present invention, it is possible to prevent the generation of burrs and/or foreign substances on a workpiece during ultrasonic welding.

The present invention can enhance battery internal performance and ensure stable battery performance by preventing the generation of burrs and/or foreign substances.

### [BRIEF DESCRIPTION OF DRAWINGS]

FIG. 1 is a diagram illustrating an ultrasonic welding device and a first member and a second member, which are workpieces, in the ultrasonic welding device according to a first embodiment of the present invention.
FIG. 2 is a diagram illustrating a process of torsional ultrasonic welding the first member and the second member in the ultrasonic welding device according to the first embodiment of the present invention.
FIG. 3 is a diagram illustrating a horn included in the ultrasonic welding device according to the first embodiment of the present invention.
FIG. 4 is a diagram illustrating a side of the horn included in the ultrasonic welding device according to the first embodiment of the present invention.
FIG. 5 is a diagram illustrating a bottom surface of the horn included in the ultrasonic welding device according to the first embodiment of the present invention.
FIG. 6 is a diagram illustrating a bottom surface of a horn included in an ultrasonic welding device according to a second embodiment of the present invention.
FIG. 7 is a diagram illustrating a bottom surface of a horn included in an ultrasonic welding device according to a third embodiment of the present invention.
FIG. 8 is a diagram illustrating a bottom surface of a horn included in an ultrasonic welding device according to a fourth embodiment of the present invention.
FIG. 9 is a diagram illustrating a cylindrical battery cell including an ultrasonic welding structure according to the first embodiment of the present invention.
FIG. 10 is a diagram illustrating a current collector in the cylindrical battery cell including the ultrasonic welding structure according to the first embodiment of the present invention.
FIG. 11 is a diagram illustrating a battery pack composed of cylindrical battery cells including an ultrasonic welding structure according to the present invention.
FIG. 12 is a diagram illustrating an electric vehicle equipped with a battery pack composed of cylindrical battery cells including an ultrasonic welding structure according to the present invention.

### [MODE FOR THE INVENTION]

The embodiments described in this specification and the configurations illustrated in the drawings are merely preferred examples of the disclosed invention, and there may be various modified examples that can replace the embodiments and drawings of this specification at the time of filing of this application.

Additionally, the same reference numbers or symbols presented in each drawing of this specification represent parts or components that perform substantially the same function. Additionally, the terminology used herein is for the purpose of describing embodiments and is not intended to limit and/or restrict the disclosed invention. Singular expressions include plural expressions unless the context clearly indicates otherwise.

In this specification, terms such as "comprising," "including," or "having" are intended to designate the presence of a feature, number, step, operation, component, part, or combination thereof described herein, and should be understood as not precluding the presence or addition of one or more other features, numbers, steps, operations, components, parts, or combinations thereof.

Additionally, terms including ordinal numbers such as "first," "second," etc., used herein may be used to describe various components, but the components are not limited by the terms, and the terms are used only for the purpose of distinguishing one component from another.

Meanwhile, the terms "front," "rear," "upper," and "lower" used in the description below are defined based on the drawings, and the shape and position of each component are not limited by these terms.

Hereinafter, embodiments according to the present invention will be described in detail with reference to the attached drawings.

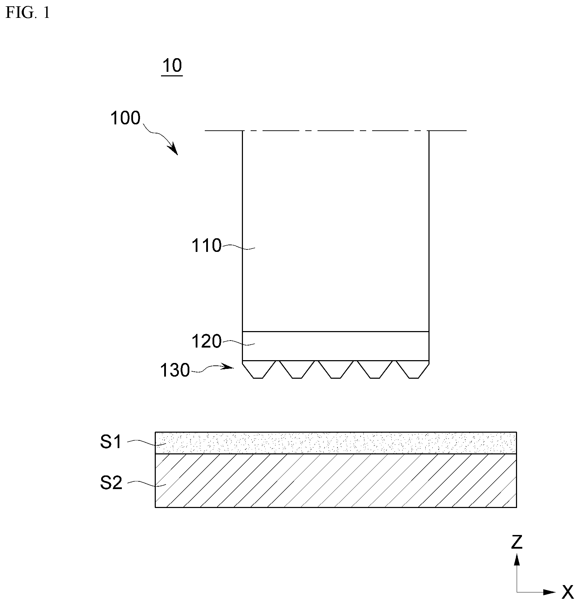

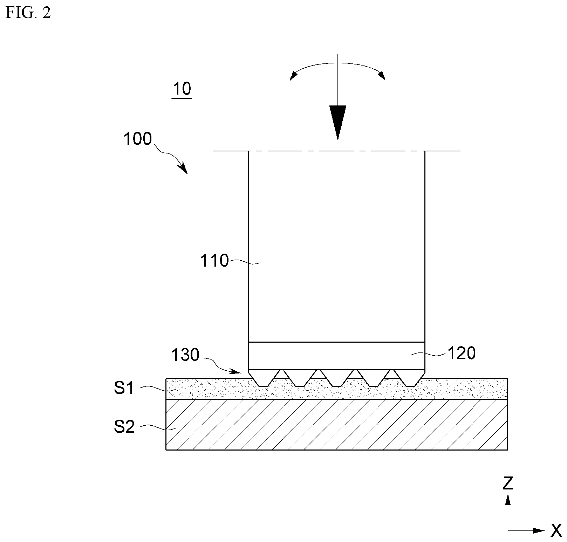

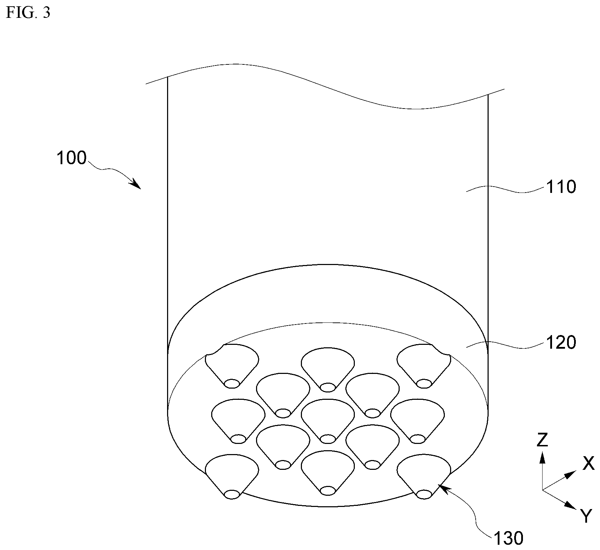

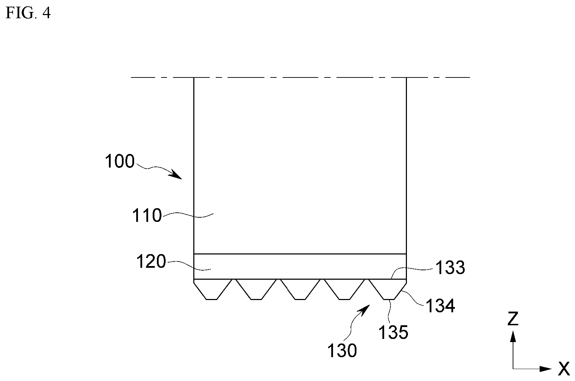

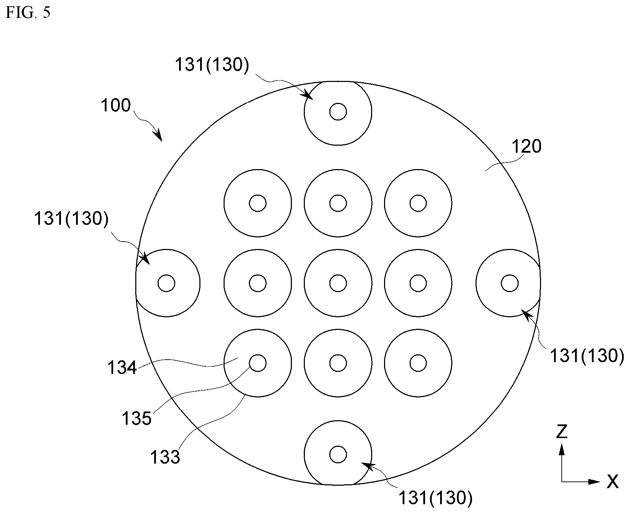

FIG. 1 is a diagram illustrating an ultrasonic welding device and a first member and a second member, which are workpieces, in the ultrasonic welding device according to a first embodiment of the present invention. FIG. 2 is a diagram illustrating a process of torsional ultrasonic welding the first member and the second member in the ultrasonic welding device according to the first embodiment of the present invention. FIG. 3 is a diagram illustrating a horn included in the ultrasonic welding device according to the first embodiment of the present invention. FIG. 4 is a diagram illustrating a side of the horn included in the ultrasonic welding device according to the first embodiment of the present invention. FIG. 5 is a diagram illustrating a bottom surface of the horn included in the ultrasonic welding device according to the first embodiment of the present invention.

Referring to FIGS. 1 to 5, an ultrasonic welding device 10 according to a first embodiment of the present invention may include a horn 100 configured to weld a first member S1 and a second member S2 to each other.

The horn 100 may create an uneven shape on the first member S1 disposed on an upper portion of the second member S2 through ultrasonic welding. The horn 100 may press the first member S1 with a predetermined load while in contact with the first member S1, and simultaneously perform ultrasonic welding of the first member S1 and the second member S2 by applying ultrasonic waves.

The horn 100 may press the first member S1 to ultrasonically weld the first member S1 and the second member S2. The horn 100 may include a horn body 110 and a horn tip 120 extending from one end of the horn body 110 and facing the first member S1. The horn 100 may include a knurling portion 130 protruding from the horn tip 120 toward the first member S1 so as to perform ultrasonic welding while in contact with the first member S1.

The knurling portion 130 may press the first member S1 with a predetermined load while in contact with the first member S1, and simultaneously perform ultrasonic welding of the first member S1 and the second member S2 by applying ultrasonic waves.

However, the present invention is not limited to ultrasonic welding only the first member S1 and the second member S2. That is, the ultrasonic welding device 10 according to the first embodiment of the present invention may ultrasonically weld two or more various members in addition to the first member S1 and the second member S2.

The ultrasonic welding device 10 according to the first embodiment of the present invention may ultrasonically weld the first member S1 and the second member S2 through complex vibration in which rotational vibration is performed by vibrating the horn 100 linearly while simultaneously torsionally vibrating the horn 100. However, it is not limited thereto.

As the ultrasonic welding device 10 according to the first embodiment of the present invention welds the first member S1 and the second member S2 by applying complex vibration ultrasonic waves that rotationally vibrate through linearly vibrating and simultaneously torsionally vibrating the horn 100, it is possible to prevent the generation of cracks and burrs at a welding site and provide uniform welding quality.

The ultrasonic welding device 10 according to the first embodiment of the present invention may include the horn 100 that presses the first member S1 to torsionally ultrasonically weld the first member S1 and the second member S2 in contact with the first member S1.

The horn 100 may include the horn body 110 configured to perform torsional rotation, and the horn tip 120 extending from one end of the horn body 110 and configured to face the first member S1. The horn body 110 may include a cylindrical shape. The horn tip 120 may include a cylindrical shape. A cross-section of the horn body 110 may include a circle. A cross-section of the horn tip 120 may include a circle.

That is, unlike linear ultrasonic welding, the horn body 110 and the horn tip 120 according to the first embodiment of the present invention may include a cylindrical shape to perform rotation for torsional ultrasonic welding.

One end of the horn tip 120 may extend from the horn body 110, and the other end of the horn tip 120 may be detachably brought into contact with the first member S1 that is ultrasonically welded by the horn 100.

The horn 100 according to the first embodiment of the present invention may include the knurling portion 130 protruding from the horn tip 120 to form irregularities on the first member S1. One end of the knurling portion 130 may extend from the horn tip 120, and the other end of the knurling portion 130 may be detachably brought into contact with the first member S1.

The knurling portion 130 may include a plurality of knurling portions 130 protruding from the horn tip 120. The plurality of knurling portions 130 may be configured to have the same shape. However, it is not limited thereto.

The plurality of knurling portions 130 may be disposed to be spaced apart from each other to prevent the first member S1 from being extruded to an outside of the horn tip 120 due to torsional rotation of the horn tip 120 and to secure a space in which the first member S1 is accommodated.

That is, unlike linear ultrasonic welding, the plurality of knurling portions 130 according to the first embodiment of the present invention rotate and vibrate for torsional ultrasonic welding, and thus may be disposed to be spaced apart from each other to prevent the first member S1 from being extruded to the outside of the horn tip 120. Through this, the first member S1 subjected to torsional ultrasonic welding is prevented from being extruded to the outside of the horn tip 120 and may be accommodated between the plurality of knurling portions 130 spaced apart from each other.

The plurality of knurling portions 130 may be arranged symmetrically from a center of the horn tip 120. The horn tip 120 may have a circular cross-section, and the plurality of knurling portions 130 may be arranged symmetrically from a center point of the horn tip 120 having the circular cross-section. However, it is not limited thereto.

The plurality of knurling portions 130 may be spaced apart from each other by different distances.

The plurality of knurling portions 130 may include a first knurling portion 131 disposed adjacent to an edge of the horn tip 120, and a second knurling portion 132 disposed adjacent to the center of the horn tip 120. The second knurling portion 132 may be disposed adjacent to and spaced apart from the first knurling portion 131.

The first knurling portion 131 may include a plurality of first knurling portions 131 protruding from the horn tip 120. The second knurling portion 132 may include a plurality of second knurling portions 132 protruding from the horn tip 120.

A distance at which the plurality of first knurling portions 131 are spaced apart from each other may be different from a distance at which the plurality of second knurling portions 132 are spaced apart from each other. The plurality of first knurling portions 131 may be spaced apart from each other by different distances. The plurality of second knurling portions 132 may be spaced apart from each other by different distances. However, it is not limited thereto.

The knurling portion 130 may be disposed in contact with the edge of the horn tip 120 to prevent a shape of the knurling portion 130 from being incompletely formed at the edge of the horn tip 120. One end of the knurling portion 130 may be in contact with the edge of the horn tip 120. The knurling portion 130 may make line contact with the edge of the horn tip 120. The knurling portion 130 may meet the edge of the horn tip 120 at two points. However, it is not limited thereto.

The first knurling portion 131 may be disposed in contact with the edge of the horn tip 120 to prevent a shape of the first knurling portion 131 from being incompletely formed at the edge of the horn tip 120. One end of the first knurling portion 131 may be in contact with the edge of the horn tip 120. The first knurling portion 131 may make line contact with the edge of the horn tip 120. The first knurling portion 131 may meet the edge of the horn tip 120 at two points. However, it is not limited thereto.

Through this, the ultrasonic welding device 10 according to the first embodiment of the present invention may remove the knurling portion 130 incompletely formed at an outermost edge of the horn tip 120, and prevent a shape of one end of the knurling portion 130 from being incompletely formed.

That is, it is possible to prevent a longitudinal cross-section of one end of the knurling portion 130 from being incompletely formed and thus becoming sharp. Therefore, the ultrasonic welding device 10 according to the first embodiment of the present invention can reduce a plastic strain of the first member S1 to be ultrasonically welded by preventing one end of the knurling portion 130 from being incompletely formed and becoming sharp.

As the plastic strain of the first member S1 decreases, the ultrasonic welding device 10 according to the first embodiment of the present invention can reduce generation of burrs or metal foreign substances from the first member S1 being ultrasonically welded.

The first knurling portion 131 may include a plurality of first knurling portions 131 orthogonal to each other. The plurality of first knurling portions 131 may include four first knurling portions 131 arranged to contact the edge of the horn tip 120 and arranged orthogonally at 90 degrees to each other from the center of the horn tip 120.

Among the four first knurling portions 131 orthogonal to each other, two first knurling portions 131 may be arranged in series with each other along an X-axis or Y-axis direction, respectively. A straight line connecting two first knurling portions 131 arranged in series along the X-axis direction among the four first knurling portions 131 may be perpendicularly orthogonal to a straight line connecting other two first knurling portions 131 arranged in series along the Y-axis direction. However, it is not limited thereto.

The knurling portion 130 according to the first embodiment of the present invention may be configured such that a cross-sectional area thereof decreases in a direction from the horn tip 120 toward the first member S1. One end of the knurling portion 130 in contact with the horn tip 120 and the other end of the knurling portion 130 in contact with the first member S1 may include a flat surface. A planar area of the one end of the knurling portion 130 in contact with the horn tip 120 may be larger than a planar area of the other end of the knurling portion 130 in contact with the first member S1.

The knurling portion 130 may have a trapezoidal longitudinal cross-section. The knurling portion 130 may include a frusto-conical shape. A transverse cross-section of the knurling portion 130 may include a circle. However, it is not limited thereto.

That is, the knurling portion 130 according to the first embodiment of the present invention may include a frusto-conical shape in which the transverse cross-section is circular and the longitudinal cross-section is trapezoidal so that the first member S1 flows smoothly due to torsional rotation of the knurling portion 130. The knurling portion 130 may include a knurling base 133 contacting the horn tip 120 and having a circular cross-section, a knurling tip 135 provided to be contactable with the first member S1, and a knurling body 134 connecting the knurling base 133 and the knurling tip 135.

The knurling base 133 and the knurling tip 135 may include a circular plane. A diameter of the circular cross-section of the knurling base 133 may be larger than a diameter of the circular cross-section of the knurling tip 135. However, it is not limited thereto.

Since the knurling portion 130 according to the first embodiment of the present invention includes a frusto-conical shape rather than a quadrangular frustum shape, concentration of stress generated in the knurling portion 130 can be prevented, and in particular, concentration of stress in the knurling tip 135, which is the other end of the knurling portion 130 facing the first member S1 to be torsionally ultrasonically welded, can be prevented. Through this, generation of burrs or metal foreign substances from the first member S1 subjected to torsional ultrasonic welding can be reduced.

The knurling portion 130 may include a plurality of knurling portions 130 spaced apart from each other. The plurality of knurling portions 130 may protrude from the horn tip 120 toward the Z-axis so as to be spaced apart from each other. Since the plurality of knurling portions 130 according to the first embodiment of the present invention are spaced apart from each other, contact between the plurality of knurling portions 130 can be prevented.

The other end of the horn tip 120 in contact with the plurality of knurling portions 130 may include a space formed between the plurality of knurling portions 130 spaced apart from each other. Therefore, in the ultrasonic welding device 10 according to the first embodiment of the present invention, a space capable of accommodating a part of the first member S1 subjected to torsional ultrasonic welding by pressure and vibration of the horn 100 may be formed between the plurality of knurling portions 130 provided at the other end of the horn tip 120.

Through this, the ultrasonic welding device 10 according to the first embodiment of the present invention can prevent the first member S1 being ultrasonically welded from being pushed to the outside of the knurling portion 130, thereby reducing generation of burrs or metal foreign substances from the first member S1 being ultrasonically welded.

The plurality of second knurling portions 132 may include nine second knurling portions 132 arranged at and near the center of the horn tip 120. The plurality of second knurling portions 132 may be arranged to form a quadrangle at the center of the horn tip 120. The plurality of second knurling portions 132 may include nine second knurling portions 132 forming a quadrangle at the center of the horn tip 120. However, it is not limited thereto.

The plurality of knurling portions 130 may include five knurling portions 130 spaced apart from each other along a diameter of the horn tip 120. The five knurling portions 130 spaced apart from each other along the diameter of the horn tip 120 may be arranged to be perpendicularly orthogonal to other five knurling portions 130 spaced apart from each other along the diameter of the horn tip 120 with respect to the center of the horn tip 120.

The five knurling portions 130 spaced apart from each other in the X-axis direction along the diameter of the horn tip 120 may be arranged to be perpendicularly orthogonal to other five knurling portions 130 spaced apart from each other in the Y-axis direction along the diameter of the horn tip 120 with respect to the center of the horn tip 120. However, it is not limited thereto.

Five knurling portions 130 spaced apart from each other along the diameter of the horn tip 120 may include two first knurling portions 131 arranged at both ends, and three second knurling portions 132 arranged between the two first knurling portions 131. However, it is not limited thereto.

A diameter of a circular cross-section of the horn tip 120 may be 3 to 4 mm. Preferably, the diameter of the circular cross-section of the horn tip 120 may be 3.35 mm. However, it is not limited thereto.

A diameter of a circular cross-section of the knurling base 133 may be 0.6 to 0.8 mm. Preferably, the diameter of the circular cross-section of the knurling base 133 may be 0.6 mm. However, it is not limited thereto.

Therefore, when five knurling portions 130 are arranged along the diameter of the circular cross-section of the horn tip 120, since the diameter of the circular cross-section of the knurling base 133 is 0.6 to 0.8 mm, a length of the five knurling portions 130 may be 3 to 4 mm. In this case, if the diameter of the circular cross-section of the horn tip 120 is 3 to 4 mm, the five knurling portions 130 may have to be arranged in contact with each other without being spaced apart.

Therefore, preferably, the diameter of the circular cross-section of the horn tip 120 may be 3.35 mm and the diameter of the circular cross-section of the knurling base 133 may be 0.6 mm so that the five knurling portions 130 may be spaced apart from each other. However, it is not limited thereto.

A diameter of a circular cross-section of the knurling tip 135 may be 0.1 to 0.2 mm. Preferably, the diameter of the circular cross-section of the knurling tip 135 may be 0.14 mm. However, it is not limited thereto.

A height of the knurling body 134 along a Z-axis direction from the horn tip 120 toward the first member S1 may be 0.2 to 0.3 mm. Preferably, a length of the knurling body 134 along the Z-axis direction from the horn tip 120 toward the first member S1 may be 0.23 mm. However, it is not limited thereto.

A distance by which the plurality of knurling portions 130 are spaced apart from each other along the X-axis or Y-axis direction may be 0.05 to 0.15 mm. Preferably, the distance by which the plurality of knurling portions 130 are spaced apart from each other along the X-axis or Y-axis direction may be 0.1 mm. However, it is not limited thereto.

A distance by which a knurling base 133 of any one of the plurality of knurling portions 130 is spaced apart from a knurling base 133 of another one of the plurality of knurling portions 130 along the X-axis or Y-axis direction may be 0.05 to 0.15 mm.

Preferably, the distance by which the knurling base 133 of any one of the plurality of knurling portions 130 is spaced apart from the knurling base 133 of another one of the plurality of knurling portions 130 along the X-axis or Y-axis direction may be 0.1 mm. However, it is not limited thereto.

A distance by which a center of a knurling tip 135 of any one of the plurality of knurling portions 130 is spaced apart from a center of a knurling tip 135 of another one of the plurality of knurling portions 130 along the X-axis or Y-axis direction may be 0.6 to 0.8 mm.

Preferably, the distance by which the center of the knurling tip 135 of any one of the plurality of knurling portions 130 is spaced apart from the center of the knurling tip 135 of another one of the plurality of knurling portions 130 along the X-axis or Y-axis direction may be 0.7 mm. However, it is not limited thereto.

Therefore, the ultrasonic welding device 10 according to the present invention may include the plurality of knurling portions 130 spaced apart from each other.

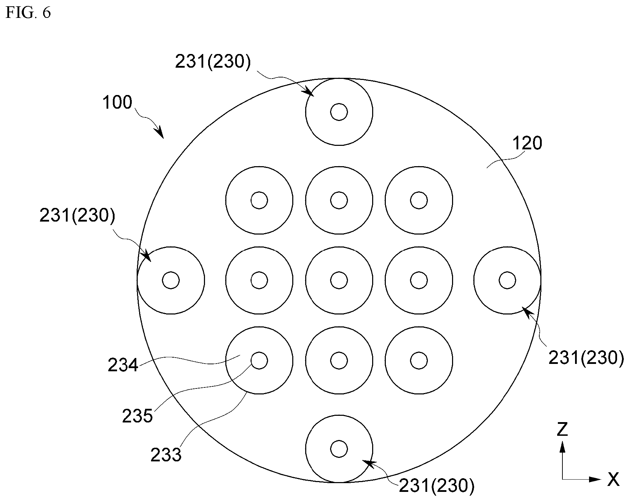

FIG. 6 is a diagram illustrating a bottom surface of a horn included in an ultrasonic welding device according to a second embodiment of the present invention. Referring to FIG. 6, a knurling portion 230 according to the second embodiment of the present invention may include a plurality of knurling portions 230.

The plurality of knurling portions 230 may include a first knurling portion 231 disposed adjacent to an edge of the horn tip 120, and a second knurling portion 232 disposed at a center of the horn tip 120 and adjacent to the center.

The first knurling portion 231 may include a plurality of first knurling portions 231 protruding from the horn tip 120. The second knurling portion 232 may include a plurality of second knurling portions 232 protruding from the horn tip 120.

The knurling portion 230 may be disposed in contact with the edge of the horn tip 120 to prevent a shape of the knurling portion 230 from being incompletely formed at the edge of the horn tip 120. One end of the knurling portion 230 may be in contact with the edge of the horn tip 120. The knurling portion 230 may make point contact with the edge of the horn tip 120. The knurling portion 230 may meet the edge of the horn tip 120 at a single point. However, it is not limited thereto.

The first knurling portion 231 may be disposed in contact with the edge of the horn tip 120 to prevent a shape of the first knurling portion 231 from being incompletely formed at the edge of the horn tip 120. One end of the first knurling portion 231 may be in contact with the edge of the horn tip 120. The first knurling portion 231 may make point contact with the edge of the horn tip 120. The first knurling portion 231 may meet the edge of the horn tip 120 at a single point. However, it is not limited thereto.

Through this, the knurling portion 230 according to the second embodiment of the present invention can prevent incomplete formation at the outermost edge of the horn tip 120, and prevent a shape of one end of the knurling portion 230 from being incompletely formed.

That is, it is possible to prevent a longitudinal cross-section of one end of the knurling portion 230 from being incompletely formed and becoming sharp. Therefore, by preventing one end of the knurling portion 230 from being incompletely formed and becoming sharp, a plastic strain of the first member (S1, see FIG. 2) subjected to torsional ultrasonic welding can be reduced.

As the plastic strain of the first member (S1, see FIG. 2) decreases, generation of burrs or metal foreign substances from the first member S1 subjected to torsional ultrasonic welding can be reduced.

The knurling portion 230 may include a knurling base 233 contacting the horn tip 120 and having a circular cross-section, a knurling tip 235 provided to be contactable with the first member (S1, see FIG. 2), and a knurling body 234 connecting the knurling base 233 and the knurling tip 235.

The diameter of the circular cross-section of the horn tip 120 may be 3 to 4 mm. Preferably, the diameter of the circular cross-section of the horn tip 120 may be 3.4 mm. The diameter of the circular cross-section of the knurling base 233 may be 0.6 to 0.8 mm. Preferably, the diameter of the circular cross-section of the knurling base 233 may be 0.6 mm.

Therefore, when five knurling portions 230 are arranged along the diameter of the circular cross-section of the horn tip 120, preferably, since the diameter of the circular cross-section of the knurling base 233 is 0.6 mm, a total length of the five knurling portions 230 may be 3 mm. Since the diameter of the circular cross-section of the horn tip 120 is 3.4 mm, the five knurling portions 130 may be spaced apart from each other by 0.1 mm.

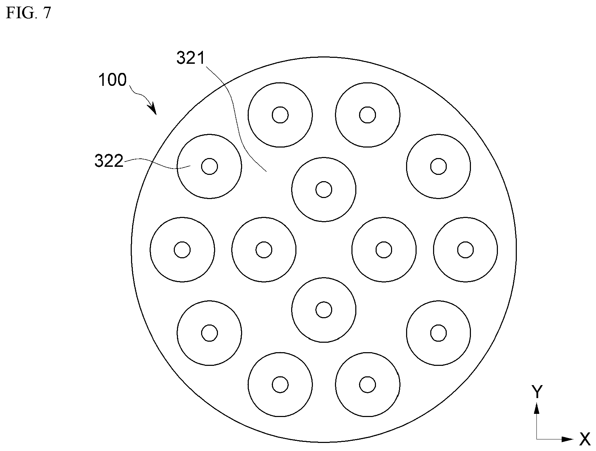

FIG. 7 is a diagram illustrating a bottom surface of a horn included in an ultrasonic welding device according to a third embodiment of the present invention. Referring to FIG. 7, a knurling portion 330 according to the third embodiment of the present invention may include a plurality of knurling portions 330.

The plurality of knurling portions 330 may include a first knurling portion 331 disposed adjacent to an edge of the horn tip 120, and a second knurling portion 332 disposed adjacent to a center of the horn tip 120.

The first knurling portion 331 may include a plurality of first knurling portions 331 protruding from the horn tip 120. The second knurling portion 332 may include a plurality of second knurling portions 332 protruding from the horn tip 120.

The knurling portion 330 may be spaced apart from the edge of the horn tip 120 toward the center of the horn tip 120 to prevent a shape of the knurling portion 330 from being incompletely formed at the edge of the horn tip 120. The first knurling portion 331 may be spaced apart from the edge of the horn tip 120 toward the center of the horn tip 120 to prevent a shape of the first knurling portion 331 from being incompletely formed at the edge of the horn tip 120.

That is, the horn tip 120 according to the third embodiment of the present invention may include a knurling surface 321 on which the knurling portion 330 is disposed, and a flat surface 322 surrounding the knurling surface 321 and adjacent to an edge of the horn tip 120.

The knurling portion 330 may be entirely located inside an area of the knurling surface 321, and the inside of an area of the flat surface 322 may be a flat area where the knurling portion 330 is not located.

Through this, the knurling portion 330 according to the third embodiment of the present invention may prevent incomplete formation at the outermost edge of the horn tip 120, and prevent a shape of one end of the knurling portion 330 from being incompletely formed.

That is, it is possible to prevent a longitudinal cross-section of one end of the knurling portion 330 from being incompletely formed and becoming sharp. Therefore, by preventing one end of the knurling portion 330 from being incompletely formed and becoming sharp, a plastic strain of the first member (S1, see FIG. 2) subjected to torsional ultrasonic welding can be reduced.

As the plastic strain of the first member (S1, see FIG. 2) decreases, generation of burrs or metal foreign substances from the first member S1 (see FIG. 2) subjected to torsional ultrasonic welding can be reduced.

The knurling portion 330 may include a first knurling portion 331 disposed near the edge of the horn tip 120, and a second knurling portion 332 disposed near the center of the horn tip 120. The first knurling portion 331 may include a plurality of first knurling portions 331, and the second knurling portion 332 may include a plurality of second knurling portions 332.

The plurality of first knurling portions 331 may be spaced apart from the edge of the horn tip 120 and arranged to form a circle along an inner circumference of the horn tip 120. Distances by which the plurality of first knurling portions 331 are spaced apart from each other may be the same. However, it is not limited thereto.

The plurality of second knurling portions 332 may be surrounded by the plurality of first knurling portions 331 and spaced apart from each other near the center of the horn tip 120. Distances by which the plurality of second knurling portions 332 are spaced apart from each other may be the same. However, it is not limited thereto.

A distance by which any one of the plurality of first knurling portions 331 and any one of the plurality of second knurling portions 332 adjacent to each other are spaced apart may be different from a distance by which the plurality of first knurling portions 331 are spaced apart from each other or a distance by which the plurality of second knurling portions 332 are spaced apart from each other. However, it is not limited thereto.

Four knurling portions 330 may be arranged along a diameter of the knurling surface 321 of the horn tip 120 along the X-axis direction. Two first knurling portions 331 may be disposed near the edge of the horn tip 120, and two second knurling portions 332 may be disposed near the center of the horn tip 120.

The knurling portion 330 may include a knurling base 333 in contact with the horn tip 120 and having a circular cross-section, a knurling tip 335 provided to be contactable with the first member S1 (see FIG. 2), and a knurling body 334 connecting the knurling base 333 and the knurling tip 335.

The diameter of the circular cross-section of the horn tip 120 may be 3 to 4 mm. Preferably, the diameter of the circular cross-section of the horn tip 120 may be 3.35 mm. The diameter of the circular cross-section of the knurling base 233 may be 0.6 to 0.8 mm. Preferably, the diameter of the circular cross-section of the knurling base 233 may be 0.6 mm.

A distance by which the first knurling portion 331 and the second knurling portion 332 adjacent to each other along the X-axis of the horn tip 120 are spaced apart may preferably be 0.1 mm.

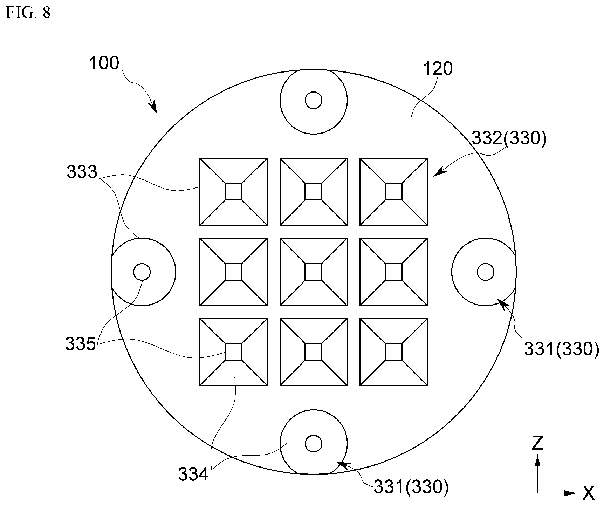

FIG. 8 is a diagram illustrating a bottom surface of a horn included in an ultrasonic welding device according to a fourth embodiment of the present invention. Referring to FIG. 8, a knurling portion 430 according to the fourth embodiment of the present invention may be configured such that a cross-sectional area thereof decreases in a direction from the horn tip 120 toward the first member (S1, see FIG. 2).

One end of the knurling portion 430 in contact with the horn tip 120 and the other end of the knurling portion 430 in contact with the first member (S1, see FIG. 2) may include a flat surface. A planar area of the one end of the knurling portion 430 in contact with the horn tip 120 may be larger than a planar area of the other end of the knurling portion 430 in contact with the first member (S1, see FIG. 2). The knurling portion 430 may have a trapezoidal longitudinal cross-section.

The knurling portion 430 according to the fourth embodiment of the present invention may include a plurality of knurling portions 430. The plurality of knurling portions 430 may include a first knurling portion 431 disposed adjacent to the edge of the horn tip 120, and a second knurling portion 432 disposed at the center of the horn tip 120 and adjacent to the center.

A shape of the first knurling portion 431 may be configured to be different from a shape of the second knurling portion 432. The first knurling portion 431 may include a frusto-conical shape. A transverse cross-section of the first knurling portion 431 may include a circle.

The knurling portion 430 may include a knurling base 433 in contact with the horn tip 120, a knurling tip 435 provided to be contactable with the first member S1 (see FIG. 2), and a knurling body 434 connecting the knurling base 433 and the knurling tip 435.

The knurling base 433 and the knurling tip 435 of the first knurling portion 431 may include a circular plane. A diameter of a circular cross-section of the knurling base 433 of the first knurling portion 431 may be larger than a diameter of a circular cross-section of the knurling tip 435.

The second knurling portion (432) may include a quadrangular frustum shape. The second knurling portion 432 may include a rectangular frustum shape. A transverse cross-section of the second knurling portion 432 may include a quadrangle.

The knurling base 433 and the knurling tip 435 of the second knurling portion 432 may include a quadrangular plane. A diameter of a quadrangular cross-section of the knurling base 433 of the second knurling portion 432 may be larger than a diameter of a quadrangular cross-section of the knurling tip 435.

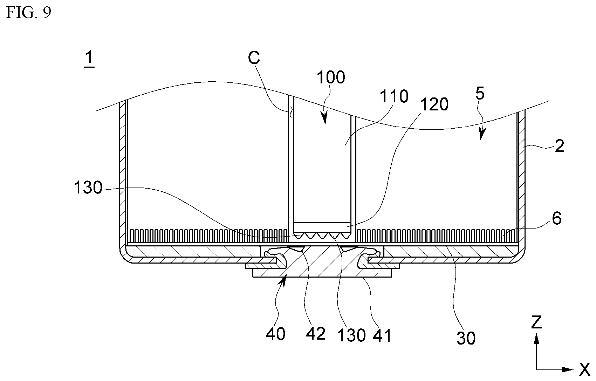

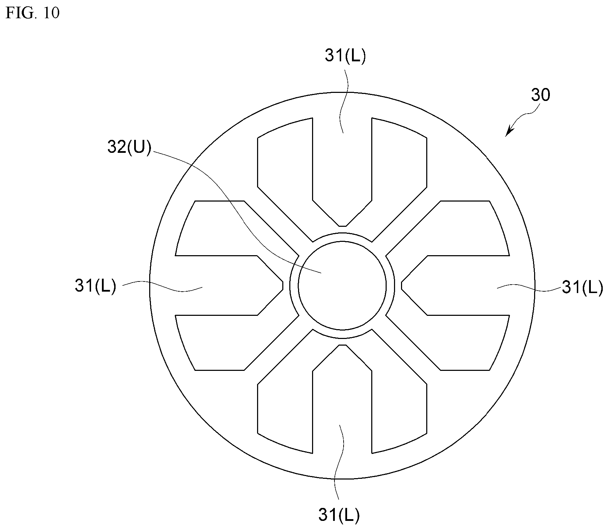

FIG. 9 is a diagram illustrating a cylindrical battery cell including an ultrasonic welding structure according to the first embodiment of the present invention. FIG. 10 is a diagram illustrating a current collector in the cylindrical battery cell including the ultrasonic welding structure according to the first embodiment of the present invention.

Referring to FIGS. 2, 9, and 10, a welded structure 20 according to the first embodiment of the present invention may include a first member S1 and a second member S2 subjected to torsional ultrasonic welding with the first member S1. The first member S1 may include a plurality of indentations P formed on a surface thereof to be spaced apart from each other by torsional ultrasonic welding. The plurality of indentations P may be circular. However, it is not limited thereto.

The welded structure 20 according to the first embodiment of the present invention may constitute a cylindrical battery cell 1. More specifically, among the plurality of laminated workpieces, the first member S1 may include a current collector plate 30 constituting the cylindrical battery cell 1, and the second member S2 may include an electrode terminal 40 provided in a battery case 2 constituting the cylindrical battery cell 1 and accommodating the current collector plate 30.

An electrode assembly 5 included in the cylindrical battery cell 1 constituted by the welded structure 20 may include a first electrode (not shown) having a first polarity, a second electrode (not shown) having a second polarity, and a separator (not shown) interposed between the first electrode (not shown) and the second electrode (not shown). The first electrode (not shown) may be a negative electrode or a positive electrode, and the second electrode (not shown) may correspond to an electrode having a polarity opposite to that of the first electrode (not shown).

The electrode assembly 5 may be manufactured by winding a laminate formed by sequentially stacking the first electrode (not shown), the separator (not shown), the second electrode (not shown), and the separator (not shown) at least once. That is, the electrode assembly 5 applied to the present invention may be a jelly-roll type electrode assembly 5. The jelly-roll type electrode assembly 5 may be provided with a center hole C formed substantially at a center thereof and extending along a Z-axis direction.

The first electrode (not shown) may include a first current collector (not shown) and a first electrode active material layer (not shown) formed by coating a first electrode active material on at least one surface of the first current collector (not shown). The second electrode (not shown) may include a second current collector (not shown) and a second electrode active material layer (not shown) formed by coating a second electrode active material on at least one surface of the second current collector (not shown).

The first electrode (not shown) may include an uncoated portion 6 where the positive electrode active material or the negative electrode active material is not coated on the first current collector (not shown). At least a portion of the uncoated portion 6 may function as an electrode tab.

At least a portion of the uncoated portion 6 may include a plurality of segments divided along a winding direction of the electrode assembly 5. The plurality of segments of the uncoated portion 6 may be bent along a radial direction of the electrode assembly 5.

The plurality of bent segments of the uncoated portion 6 may be overlapped in multiple layers. The current collector plate 30 may be coupled to an area where the plurality of segments of the uncoated portion 6 are overlapped in multiple layers.

The current collector plate 30 may be coupled to one side of the electrode assembly 5. The current collector plate 30 may include an electrode coupling portion 31 coupled to the electrode assembly 5, and a terminal coupling portion 32 coupled to the electrode terminal 40.

The electrode coupling portion 31 may be disposed on one surface of the electrode assembly 5. The electrode coupling portion 31 may be coupled to the uncoated portion 6. The electrode coupling portion 31 may be coupled to the uncoated portion 6 by laser welding.

The electrode coupling portion 31 may include a laser welding portion L that is laser-welded to the uncoated portion 6. The electrode coupling portion 31 may include a plurality of electrode coupling portions 31.

The terminal coupling portion 32 may be coupled to the electrode terminal 40. The terminal coupling portion 32 may be coupled to the electrode terminal 40 by torsional ultrasonic welding. The terminal coupling portion 32 may include an ultrasonic welding portion U coupled to the electrode terminal 40.

The entire terminal coupling portion 32 may constitute the ultrasonic welding portion U, or a central portion of the terminal coupling portion 32 may constitute the ultrasonic welding portion U. However, it is not limited thereto.

At least a portion of the terminal coupling portion 32 may be formed to be thinner than the electrode coupling portion 31. An area of the terminal coupling portion 32 having a thickness smaller than that of the electrode coupling portion 31 may include the ultrasonic welding portion U.

The electrode terminal 40 may include a terminal exposed portion 41 and a terminal insertion portion 42. The terminal exposed portion 41 may be exposed to the outside of the battery case 2. The terminal exposed portion 41 may be located at the center of the battery case 2.

The terminal insertion portion 42 may be coupled to the terminal coupling portion 32 of the current collector plate 30. The terminal insertion portion 42 may be coupled to the current collector plate 30 by torsional ultrasonic welding at a position corresponding to the center hole C of the electrode assembly 5.

The current collector plate 30 and the electrode terminal 40 may be welded by torsional ultrasonic welding. Ultrasonic welding may require cheaper equipment and cause less thermal deformation compared to laser welding. While heat generated by laser welding may damage the separator of the electrode assembly 5, ultrasonic welding may prevent damage to the separator.

In the welding process, laser welding may require securing the size of the center hole C to be larger than a certain size to secure a laser focus, but ultrasonic welding may be performed by inserting the horn 100 corresponding to the size of the center hole C.

Since the horn 100 according to the first embodiment of the present invention includes the horn body 110 having a cylindrical shape, insertion and separation corresponding to the hollow center hole C may be easy. In addition, the cylindrical horn body 110 rotating for torsional ultrasonic welding can be prevented from colliding with the center hole C and can rotate smoothly.

The ultrasonic welding device 10 may torsionally ultrasonically weld the current collector plate 30 and the electrode terminal 40. That is, the current collector plate 30 may correspond to the first member S1, and the electrode terminal 40 may correspond to the second member S2.

Since the ultrasonic welding device 10 according to the first embodiment of the present invention performs torsional ultrasonic welding, unlike linear ultrasonic welding, a separate anvil (not shown) disposed on one side of the second member S2 with the first member S1 and the second member S2 interposed between the knurling portion 130 may not be required.

A height at which the knurling portion 130 provided in the horn 100 protrudes toward the current collector plate 30 may be equal to or greater than a thickness of the current collector plate 30. Here, the thickness of the current collector plate 30 may include a thickness of a portion where torsional ultrasonic welding occurs in the current collector plate 30. That is, it may include a thickness of the ultrasonic welding portion U of the terminal coupling portion 32 of the current collector plate 30.

The horn 100 of the ultrasonic welding device 10 may be inserted into the center hole C of the electrode assembly 5 to perform torsional ultrasonic welding between the current collector plate 30 and the electrode terminal 40.

According to torsional ultrasonic welding, the first member S1 and the second member S2 may be welded by recrystallization due to plastic flow. Therefore, if the terminal coupling portion 32 is excessively thick, plastic flow may not occur smoothly, so it may be preferable that the terminal coupling portion 32 is configured to have a predetermined thickness or less.

When torsional ultrasonic welding is performed by the horn 100, plastic deformation may occur in the first member S1 corresponding to the edge of the knurling portion 130 due to the pressing force of the horn 100. Due to the plastic deformation of the first member S1, foreign substances such as burrs or metal particles may be generated in the first member S1.

Therefore, when the first member S1 and the second member S2 correspond to components constituting the cylindrical battery cell 1, foreign substances including burrs or metal particles may remain inside the cylindrical battery cell 1.

Foreign substances remaining inside the cylindrical battery cell 1 may damage the separator (not shown) constituting the cylindrical battery cell 1, and may be a major cause affecting the performance of the cylindrical battery cell 1 as they are potential risk factors that may cause a short circuit.

The ultrasonic welding device 10 according to the first embodiment of the present invention reduces plastic deformation due to pressing force at the outermost point of the knurling portion 130 during welding, thereby obtaining an effect of preventing the generation of burrs and foreign substances.

Accordingly, when the first member S1 and the second member S2 correspond to components in the cylindrical battery cell 1, internal performance enhancement and stable battery performance of the cylindrical battery cell 1 can be secured through prevention of foreign substances.

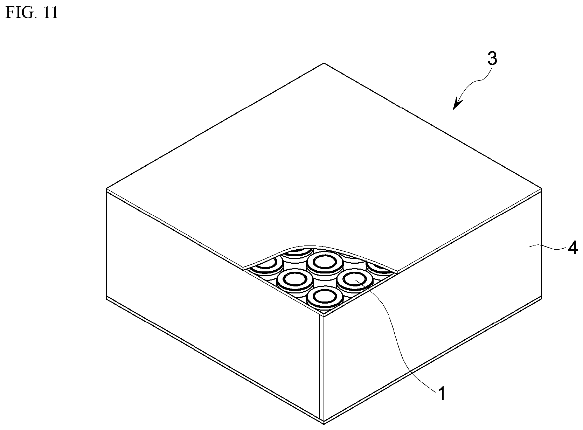

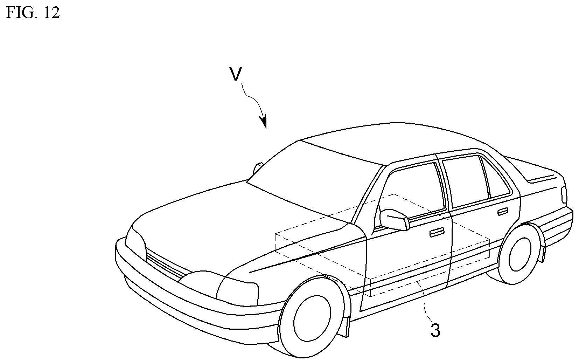

FIG. 11 is a diagram illustrating a battery pack composed of cylindrical battery cells including an ultrasonic welding structure according to the present invention. FIG. 12 is a diagram illustrating an electric vehicle equipped with a battery pack composed of cylindrical battery cells including an ultrasonic welding structure according to the present invention.

Referring to FIGS. 11 and 12, a plurality of cylindrical battery cells 1 including an ultrasonic welding structure according to the present invention may be accommodated in a pack case 4 to form a battery pack 3.

The battery pack 3 may further include various control and protection systems, such as a Battery Management System (BMS).

The battery pack 3 may be applied to various devices. Specifically, it can be applied to transportation means such as electric bicycles, electric vehicles, and hybrid vehicles, or Energy Storage Systems (ESS). However, it is not limited thereto, and may be applicable to various devices that can use secondary batteries.

The electric vehicle V may be driven by wheels driven by an electric motor supplied with power from the battery pack 3.

Although the technical spirit of the present invention has been described above by specific embodiments, the scope of the present invention is not limited to these embodiments.

Various embodiments modified or changed by those skilled in the art within the scope not departing from the gist of the technical idea of the present invention specified in the claims will also fall within the scope of the present invention.

## Claims

1. An ultrasonic welding device comprising a horn for pressing a first member to torsionally ultrasonically weld the first member and a second member in contact with the first member, wherein
the horn includes a horn body having a cylindrical shape to perform torsional rotation,
a horn tip extending from one end of the horn body and facing the first member, and
a knurling portion protruding from the horn tip to form irregularities on the first member, and wherein
the knurling portion includes a plurality of knurling portions spaced apart from each other to prevent the first member from being extruded to an outside of the horn tip due to torsional rotation of the horn and to secure a space in which the first member is accommodated.

2. The ultrasonic welding device of claim 1, wherein
the plurality of knurling portions are arranged symmetrically from a center of the horn tip.

3. The ultrasonic welding device of claim 1, wherein
the plurality of knurling portions are spaced apart from each other by different distances.

4. The ultrasonic welding device of claim 1, wherein
the plurality of knurling portions include
a first knurling portion adjacent to an edge of the horn tip, and
a second knurling portion disposed at and near the center of the horn tip.

5. The ultrasonic welding device of claim 4, wherein
a transverse cross-section of the horn tip includes a circle, and
the first knurling portion includes a plurality of first knurling portions orthogonal to each other with respect to the center of the horn tip.

6. The ultrasonic welding device of claim 1, wherein
the knurling portion is configured such that a cross-sectional area thereof decreases in a direction from the horn tip toward the first member.

7. The ultrasonic welding device of claim 6, wherein
the knurling portion includes a frusto-conical shape in which a transverse cross-section of the knurling portion is circular and a longitudinal cross-section of the knurling portion is trapezoidal so that the first member flows smoothly due to torsional rotation of the knurling portion.

8. The ultrasonic welding device of claim 1, wherein
the knurling portion includes
a knurling base in contact with the horn tip and having a circular cross-section,
a knurling tip capable of contacting the first member and having a circular cross-section with a diameter smaller than a diameter of the cross-section of the knurling base, and
a knurling body connecting the knurling base and the knurling tip.

9. The ultrasonic welding device of claim 4, wherein
the first knurling portion is disposed to make point contact with the edge of the horn tip.

10. The ultrasonic welding device of claim 4, wherein
the first knurling portion is disposed to be spaced apart from the edge of the horn tip toward the center of the horn tip.

11. The ultrasonic welding device of claim 4, wherein
a shape of the first knurling portion is configured to be different from a shape of the second knurling portion.

12. The ultrasonic welding device of claim 11, wherein
the plurality of knurling portions have a trapezoidal longitudinal cross-section,
the first knurling portion has a frusto-conical shape, and
the second knurling portion has a rectangular frustum shape.

13. The ultrasonic welding device of claim 1, wherein
the plurality of knurling portions include five knurling portions spaced apart from each other along a diameter of the horn tip.

14. An ultrasonic welding device comprising a horn for pressing a first member to torsionally ultrasonically weld the first member and a second member in contact with the first member, wherein
the horn includes a horn body configured to perform torsional rotation,
a horn tip extending from one end of the horn body and facing the first member, and
a knurling portion protruding from the horn tip to form irregularities on the first member, and wherein
the horn tip includes
a knurling surface on which the knurling portion is disposed, and
a flat surface surrounding the knurling surface and adjacent to an edge of the horn tip to prevent a shape of the irregularities corresponding to the edge of the horn tip from being incompletely formed.

15. The ultrasonic welding device of claim 14, wherein
the knurling portion includes a frusto-conical shape in which a longitudinal cross-section of the knurling portion forms a trapezoid.

16. A welded structure comprising a first member and a second member ultrasonically welded to the first member, wherein
the first member includes a plurality of indentations formed on a surface thereof to be spaced apart from each other by torsional ultrasonic welding, and
the plurality of indentations are circular.

17. The welded structure of claim 16, wherein
the welded structure constitutes a cylindrical battery cell.

18. The welded structure of claim 17, wherein
the first member includes a current collector plate constituting the cylindrical battery cell, and
the second member includes an electrode terminal provided in a battery case constituting the cylindrical battery cell and accommodating the current collector plate.
